# DEMANDE DE BREVET EUROPEEN

(11) **EP 4 607 020 A1**
(43) Date de publication de la demande: **27.08.2025**
(21) Numéro de dépôt: 25157420.8
(22) Date de dépôt: 12.02.2025
(51) Int. Cl.: F02K 1/72

(54) **TURBORÉACTEUR COMPORTANT UNE NACELLE ÉQUIPÉE DE VOLETS INVERSEURS**

(30) Priorité: 26.02.2024 FR 2401857
(71) Demandeur: Airbus-OPS SAS, 31060 Toulouse (FR)
(72) Inventeur: VANDERBAUWEDE, Simon, TOULOUSE (FR)
(74) Mandataire: Airbus-OPS SAS

(57) **Abrégé**

L'invention concerne un turboréacteur double flux (100) avec une nacelle (102) présentant un axe longitudinal (X) et comportant un cadre avant (206), un capot mobile (207a), au moins deux volets inverseurs (104) articulés sur le capot mobile (207a) et un mécanisme de manœuvre (250) avec un premier bras (252) articulé sur le cadre avant (206), un deuxième bras (258) articulé sur le capot mobile (207a), un troisième bras (256) monté articulé sur le deuxième bras (258), un quatrième bras (254) articulé sur le troisième bras (256) et le premier bras (252), deux ferrures (260) articulées sur le troisième bras (256), et un arbre de liaison (264) articulé sur la ferrure (260) où un arbre (262) de chaque volet inverseur (104) est articulé sur l'arbre de liaison (264) par une liaison rotule (264b).

Avec un tel arrangement, l'encombrement est réduit.

## Description

### DOMAINE TECHNIQUE

La présente invention concerne un turboréacteur double flux qui comporte une nacelle équipée d'une pluralité de volets inverseurs et d'un mécanisme de manœuvre amélioré, ainsi qu'un aéronef comportant au moins un tel turboréacteur double flux.

### ÉTAT DE LA TECHNIQUE ANTÉRIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. L'air extérieur pénètre dans le turboréacteur double flux au niveau d'une entrée d'air à l'avant, puis il se sépare en un flux primaire qui alimente le moteur et un flux secondaire qui s'écoule entre le moteur et la nacelle dans une veine secondaire.

La nacelle comporte une pluralité de volets inverseurs, chacun étant mobile entre une position fermée dans laquelle il vient en continuité avec la surface extérieure de la nacelle et une position ouverte dans laquelle il ouvre une fenêtre dans la paroi de la nacelle pour expulser l'air du flux secondaire vers l'extérieur.

Le volet inverseur est monté mobile en rotation sur la structure de la nacelle de manière à passer d'une position fermée où le volet inverseur n'obture pas la veine du flux secondaire à une position ouverte où le volet inverseur obture la veine et dévie une partie du flux secondaire vers l'extérieur par la fenêtre.

Le déplacement de chaque volet inverseur est commandé par un ou plusieurs actionneurs qui sont relativement lourds et encombrants.

Bien que le mécanisme d'un tel volet inverseur donne entière satisfaction, il est souhaitable de trouver des mécanismes différents.

### EXPOSÉ DE L'INVENTION

Un objet de la présente invention est de proposer un turboréacteur double flux qui comporte une nacelle équipée d'une pluralité de volets inverseurs avec un mécanisme de manœuvre différent.

À cet effet, est proposé un turboréacteur double flux comportant un moteur et une nacelle entourant le moteur, où une veine secondaire d'un flux secondaire est délimitée entre la nacelle et le moteur, ladite nacelle présentant un axe longitudinal et comportant :
- un cadre avant fixe,
- un capot mobile qui est mobile en translation par rapport au cadre avant selon une direction de translation entre une position avancée dans laquelle le capot mobile est rapproché du cadre avant et une position reculée dans laquelle le capot mobile est éloigné du cadre avant pour définir entre eux une fenêtre ouverte entre la veine secondaire et l'extérieur de la nacelle,
- au moins deux volets inverseurs, chacun étant monté articulé sur le capot mobile entre une position fermée dans laquelle il obture une zone de la fenêtre et une position ouverte dans laquelle il n'obture pas ladite zone de la fenêtre et s'étend en travers de la veine secondaire,
- un ensemble d'actionneurs où chacun est monté entre le cadre avant et le capot mobile, et prévu pour assurer à partir de la position avancée, un déplacement en translation du capot mobile jusqu'à la position reculée et inversement, et
- pour une paire de deux volets inverseurs voisins, un mécanisme de manœuvre comportant :
   - un premier bras présentant une première extrémité et une deuxième extrémité, où la première extrémité est montée articulée sur le cadre avant autour d'un premier axe de rotation orthoradial par rapport à l'axe longitudinal,
   - un deuxième bras présentant une première extrémité et une deuxième extrémité, où la première extrémité est montée articulée sur le capot mobile autour d'un deuxième axe de rotation orthoradial par rapport à l'axe longitudinal,
   - un troisième bras présentant une première extrémité et une deuxième extrémité, où la première extrémité est montée articulée sur la deuxième extrémité du deuxième bras autour d'un troisième axe de rotation orthoradial par rapport à l'axe longitudinal,
   - un quatrième bras présentant une première extrémité et une deuxième extrémité, où la première extrémité est montée articulée sur la deuxième extrémité du troisième bras autour d'un quatrième axe de rotation orthoradial par rapport à l'axe longitudinal, et où la deuxième extrémité est montée articulée sur la deuxième extrémité du premier bras autour d'un cinquième axe de rotation perpendiculaire au quatrième axe de rotation,
   - pour chaque volet inverseur de la paire, une ferrure montée articulée sur le troisième bras autour d'un sixième axe de rotation perpendiculaire au troisième axe de rotation, et
   - pour chaque volet inverseur de la paire, un arbre de liaison dont une première extrémité est montée articulée sur la ferrure autour d'un septième axe de rotation perpendiculaire au sixième axe de rotation,
où pour chaque volet inverseur de la paire, un arbre dudit volet inverseur est monté articulé sur une deuxième extrémité de l'arbre de liaison par une liaison rotule et où l'axe de l'arbre est orthoradial par rapport à l'axe longitudinal.

Un tel turboréacteur permet entre autres d'améliorer les performances aérodynamiques en réduisant l'encombrement du mécanisme d'ouverture.

Avantageusement, en position avancée, les axes de rotation s'étendent de l'avant vers l'arrière dans l'ordre suivant : le premier axe de rotation, le deuxième axe de rotation, le troisième axe de rotation et le quatrième axe de rotation et où la deuxième extrémité du quatrième bras est en avant par rapport à la première extrémité du quatrième bras, et en position reculée, les axes de rotation s'étendent de l'avant vers l'arrière dans l'ordre suivant : le premier axe de rotation, le quatrième axe de rotation, le troisième axe de rotation, le deuxième axe de rotation, et où la deuxième extrémité du quatrième bras est en avant par rapport à la première extrémité du quatrième bras.

Avantageusement, l'arbre est composé d'un premier sous-arbre et d'un deuxième sous-arbre solidaires l'un de l'autre, le premier sous-arbre est monté articulé sur la deuxième extrémité de l'arbre de liaison par la liaison rotule et le deuxième sous-arbre est monté articulé sur le volet inverseur autour d'un huitième axe de rotation.

Avantageusement, le premier sous-arbre et le deuxième sous-arbre sont décalés l'un par rapport à l'autre.

Avantageusement, l'arbre comporte une palette, et le mécanisme de manœuvre comporte un amortisseur à ressort dont une première extrémité est montée articulée sur la palette et dont la deuxième extrémité est montée articulée sur le volet inverseur.

Avantageusement, la liaison entre la deuxième extrémité du quatrième bras et la deuxième extrémité du premier bras présente un degré de liberté en translation parallèlement au cinquième axe de rotation, le mécanisme de manœuvre comporte un ressort de contrainte disposé entre le quatrième bras et le premier bras et arrangé de manière à repousser le premier bras à distance du quatrième axe de rotation.

Avantageusement, le premier bras forme un capot et en position avancée, le premier bras recouvre les éléments du mécanisme de manœuvre.

Avantageusement, le mécanisme de manœuvre comporte des patins élastiques fixés sur le troisième bras et arrangés pour venir contre le capot mobile en position avancée.

Avantageusement, en position avancée, le premier bras présente une extension qui recouvre les bords des volets inverseurs voisins.

L'invention propose également un aéronef comportant au moins un turboréacteur double flux selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur selon l'invention,
[Fig. 2] est une vue en perspective d'une partie du turboréacteur selon l'invention en position avancée,
[Fig. 3] est une vue en perspective identique à celle de la Fig. 2 en position reculée et ouverte,
[Fig. 4] est une vue en coupe par un plan radial du turboréacteur selon l'invention en position avancée,
[Fig. 5] est une vue en coupe par un plan radial du turboréacteur selon l'invention en position reculée et ouverte,
[Fig. 6] est une vue de l'avant du turboréacteur selon l'invention en position reculée et ouverte,
[Fig. 7] est une vue de l'arrière du turboréacteur selon l'invention en position reculée et ouverte,
[Fig. 8] est une vue de l'arrière du turboréacteur selon l'invention en position reculée et ouverte,
[Fig. 9] est une vue en coupe par un plan parallèle à un axe longitudinal du turboréacteur selon l'invention,
[Fig. 10] est une vue de détail d'un mécanisme de manœuvre mis en œuvre dans le turboréacteur selon l'invention, et
[Fig. 11] est une vue de détail d'une variante de réalisation de l'invention.

### EXPOSÉ DÉTAILLÉ DE MODES DE RÉALISATION

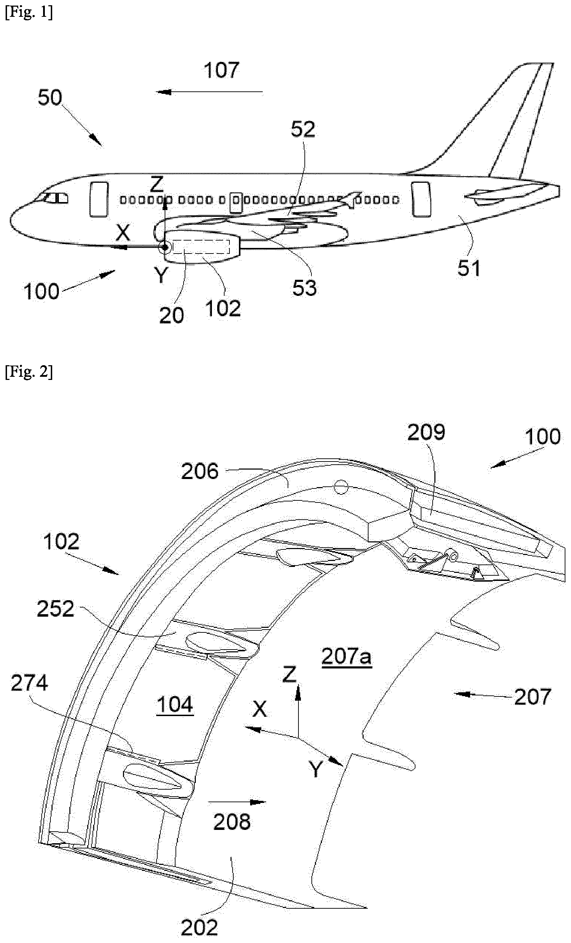

Dans la description qui suit, les termes relatifs à une position sont pris en référence à un aéronef en position d'avancement comme il est représenté sur la Fig. 1 et où la flèche 107 montre la direction d'avancement de l'aéronef en vol. Les termes « amont » et « aval » sont en référence par rapport au sens d'écoulement de l'air dans la nacelle.

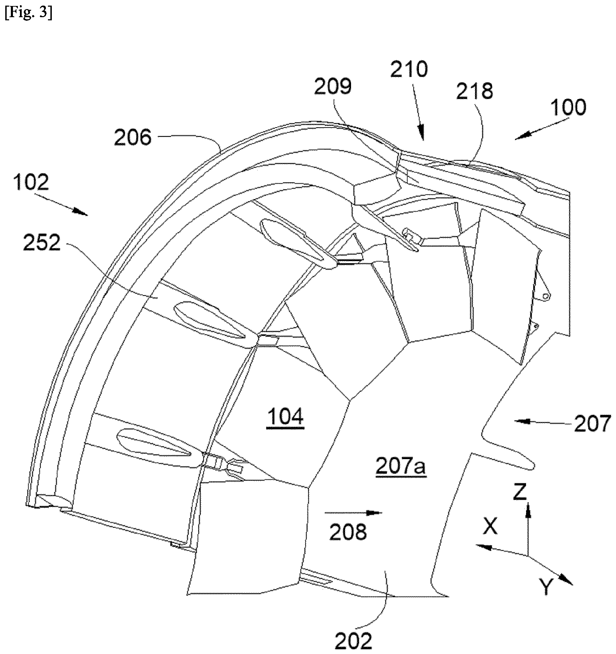

La Fig. 1 montre un aéronef 50 qui comporte un fuselage 51 de chaque côté duquel est fixée une aile 52 qui porte au moins un turboréacteur double flux 100 selon l'invention. La fixation du turboréacteur double flux 100 sous l'aile 52 s'effectue par l'intermédiaire d'un mât 53. La Fig. 2 et la Fig. 3 montrent une partie du turboréacteur double flux 100 qui présente une nacelle 102 et un moteur 20 (en traits pointillés sur la Fig. 1) qui est logé à l'intérieur de la nacelle 102 et qui comporte un carter de soufflante à l'avant.

Dans la description qui suit, et par convention, on appelle X l'axe longitudinal du turboréacteur double flux 100 qui est parallèle à l'axe longitudinal de l'aéronef 50 ou axe de roulis, orienté positivement dans le sens d'avancement de l'aéronef 50, on appelle Y l'axe transversal qui est parallèle à l'axe de tangage de l'aéronef 50 qui est horizontal lorsque l'aéronef 50 est au sol, et Z l'axe vertical qui est parallèle à l'axe de lacet lorsque l'aéronef 50 est au sol, ces trois directions X, Y et Z étant orthogonales entre elles.

Le turboréacteur double flux 100 présente entre la nacelle 102 et le moteur 20, une veine secondaire 202 dans laquelle circule un flux secondaire 208 d'air provenant d'une entrée d'air à travers une soufflante. L'axe longitudinal X est également l'axe longitudinal de la nacelle 102.

La nacelle 102 présente une structure fixe qui est montée fixe par exemple sur le carter de soufflante et qui comporte ici un cadre avant 206 monté autour et à l'arrière du carter de soufflante.

La nacelle 102 présente également un ensemble mobile 207 qui présente un capot mobile 207a formant entre autres, les parois de la tuyère par laquelle les gaz s'échappent de la nacelle 102 par l'arrière.

Le capot mobile 207a est mobile en translation par rapport au cadre avant 206 selon une direction de translation parallèle à l'axe longitudinal X entre une position avancée (Fig. 2) dans laquelle le capot mobile 207a est rapproché du cadre avant 206 et une position reculée (Fig. 3) dans laquelle le capot mobile 207a est éloigné du cadre avant 206 pour définir entre eux une fenêtre 210 ouverte entre la veine secondaire 202 et l'extérieur de la nacelle 102. Le cadre avant 206 délimite la fenêtre 210 en amont par rapport à l'axe longitudinal X et le capot mobile 207a délimite la fenêtre 210 en aval par rapport à l'axe longitudinal X.

Le flux secondaire 208 peut alors s'échapper par la fenêtre 210 qui s'étend sur la circonférence de la nacelle 102.

Dans le mode de réalisation de l'invention présenté ici, la nacelle 102 présente également des cascades 209 qui sont solidaires de la structure fixe 206 et sont disposées en travers de la fenêtre 210. Les cascades 209 sont constituées de déflecteurs permettant la redirection du flux passant de l'intérieur vers l'extérieur et plus particulièrement vers l'avant.

La translation du capot mobile 207a est réalisée par tous systèmes de glissières classiques entre la structure fixe et le capot mobile 207a.

La nacelle 102 comporte également au moins deux volets inverseurs 104 où chacun est monté articulé sur le capot mobile 207a entre une position fermée (Fig. 2) dans laquelle il obture une zone de la fenêtre 210 et une position ouverte (Fig. 3) dans laquelle il n'obture pas ladite zone de la fenêtre 210 et s'étend en travers de la veine secondaire 202. Les volets inverseurs 104 sont répartis sur la périphérie de la nacelle 102 en fonction de l'ouverture angulaire de la fenêtre 210 autour de l'axe longitudinal X.

Les déplacements des volets inverseurs 104 de la position fermée/ouvert à la position ouverte/fermée s'effectue lorsque le capot mobile 207a passe de la position avancée/reculée à la position reculée/avancée grâce à la mise en place d'un mécanisme de manœuvre 250 pour chaque paire de deux volets inverseurs 104 voisins.

Le mécanisme de manœuvre 250 est ainsi prévu pour faire passer chaque volet inverseur 104 de la position fermée à la position ouverte lorsque le capot mobile 207a passe de la position avancée à la position reculée et inversement.

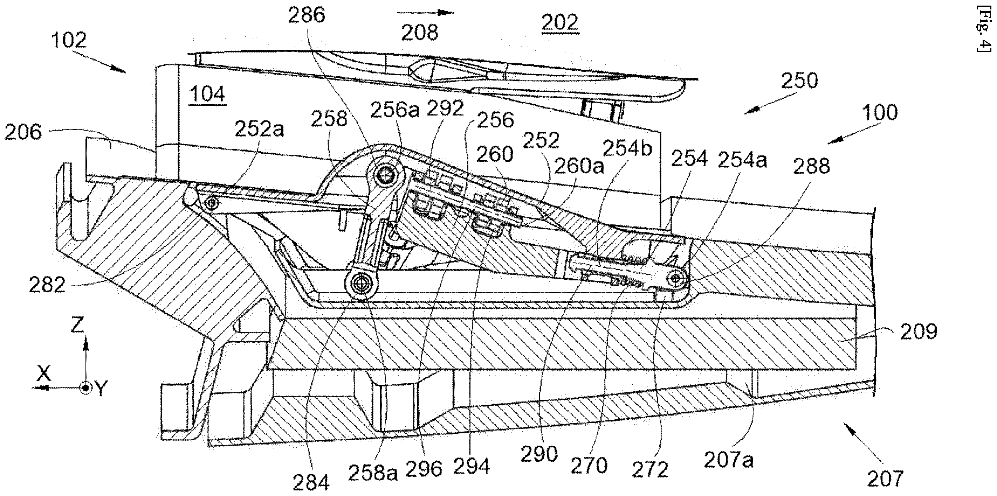

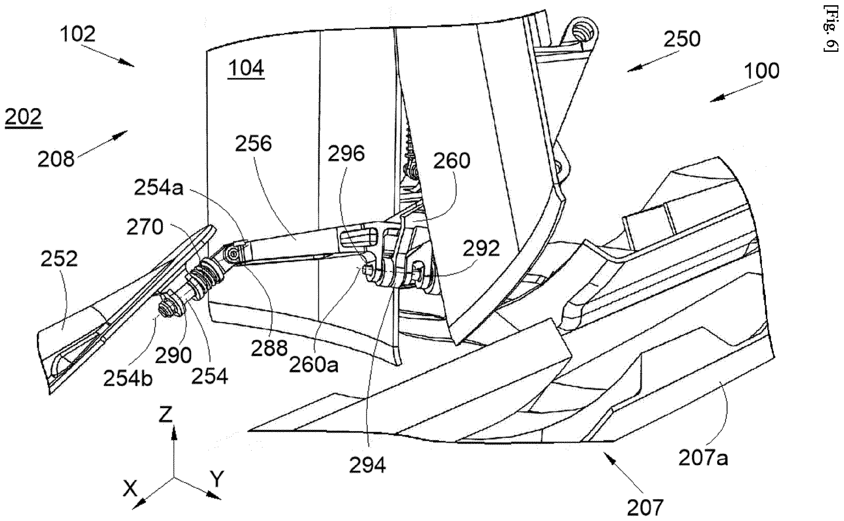

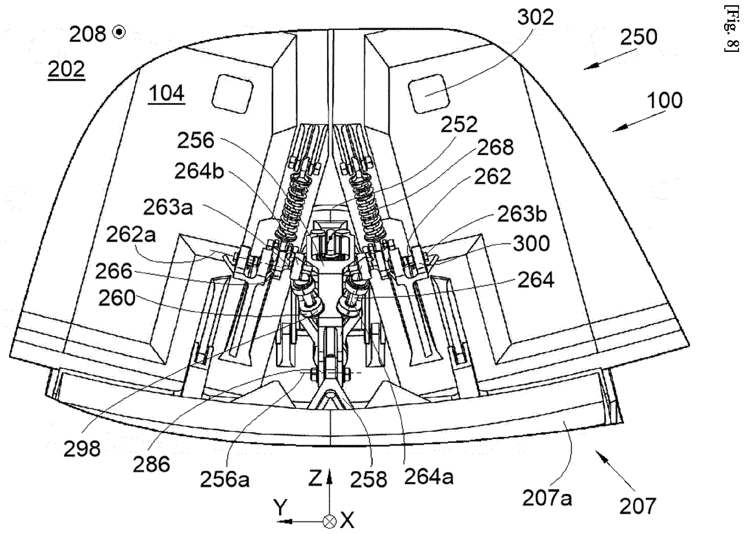

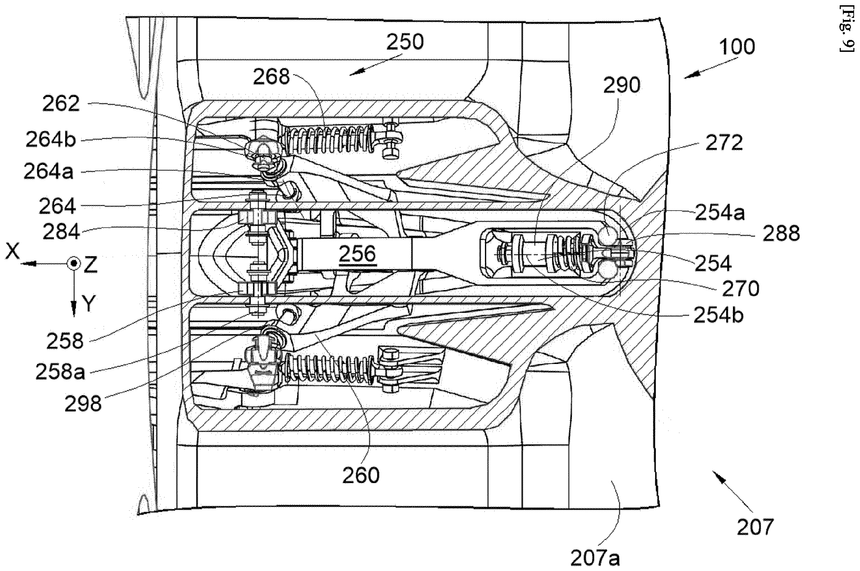

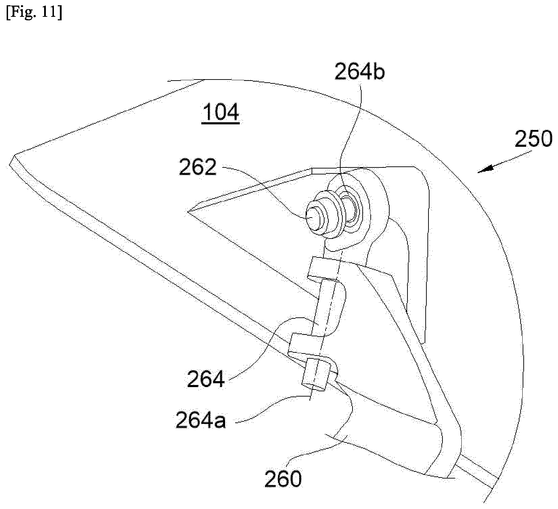

Les Fig. 4 à 10 montrent différentes vues du mécanisme de manœuvre 250 et la Fig. 11 montre une variante de réalisation.

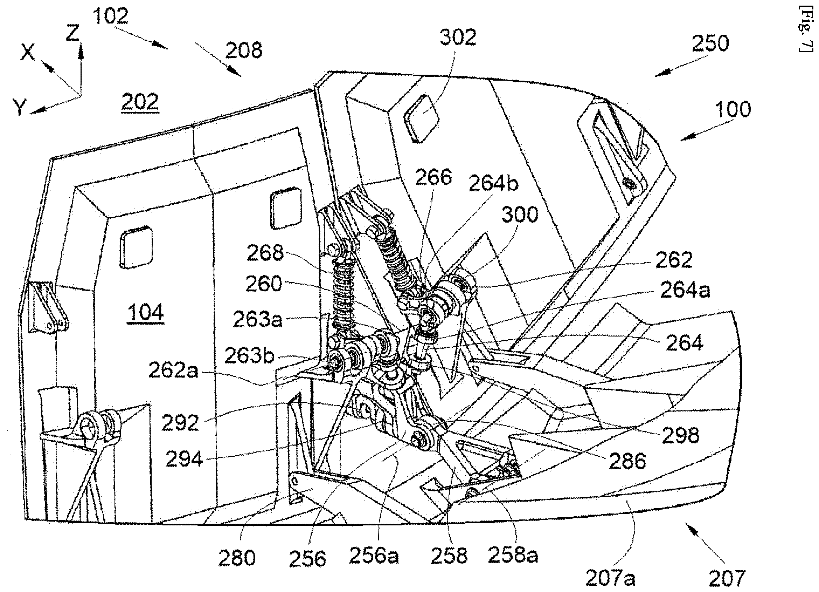

Chaque volet inverseur 104 est monté mobile en rotation sur le capot mobile 207a par l'intermédiaire de deux charnières 280 qui sont plus visibles à la Fig. 7 et qui présentent le même axe de charnière. Les charnières 280 sont disposées le long d'un bord amont du volet inverseur 104 tandis que le bord libre opposé se positionne vers l'aval en position fermée et vers le moteur 20 en position ouverte.

Chaque charnière 280 prend ici la forme d'une chape femelle solidaire du capot mobile 207a et d'une chape mâle solidaire du volet inverseur 104. La chape mâle s'insère dans la chape femelle et y est fixée par la mise en place d'un arbre de solidarisation.

Le déplacement du capot mobile 207a par rapport au cadre avant 206 est réalisé par la mise en place d'un ensemble d'actionneurs 218, comme des vérins double effets, où chacun est monté entre le cadre avant 206 et le capot mobile 207a. Chaque actionneur 218 assure à partir de la position avancée, un déplacement en translation du capot mobile 207a jusqu'à la position reculée et inversement. Chaque actionneur 218 est commandé par une unité de contrôle, par exemple du type processeur, qui commande les déplacements dans un sens ou dans l'autre selon les besoins de l'aéronef 50.

Comme mentionné ci-dessus, il y a un mécanisme de manœuvre 250 pour deux volets inverseurs 104 disposés l'un à côté de l'autre et le mécanisme de manœuvre 250 est disposé entre eux.

Le mécanisme de manœuvre 250 comporte un premier bras 252 qui présente une première extrémité et une deuxième extrémité. La première extrémité du premier bras 252 est montée articulée, en particulier mobile en rotation, sur le cadre avant 206 autour d'un premier axe de rotation 252a qui est orthoradial par rapport à l'axe longitudinal X.

Le premier bras 252 est monté mobile en rotation sur le cadre avant 206 par l'intermédiaire de deux charnières 282 qui présentent le même axe de charnière confondu avec le premier axe de rotation 252a. Les charnières 282 sont disposées au niveau de la première extrémité du premier bras 252 qui est en amont tandis que la deuxième extrémité libre est orientée vers l'aval. Chaque charnière 282 prend ici la forme d'une chape femelle solidaire du premier bras 252 et d'une chape mâle solidaire du cadre avant 206. La chape mâle s'insère dans la chape femelle et y est fixée par la mise en place d'un arbre de solidarisation.

Dans le mode de réalisation de l'invention présenté ici, le premier bras 252 prend la forme d'un capot qui est arrangé de manière à ce qu'en position avancée, le premier bras 252 recouvre les autres éléments du mécanisme de manœuvre 250 qui sont décrits ci-dessous. En position avancée, les autres éléments se positionnent entre le capot mobile 207a et le premier bras 252 en forme de capot. Ce dernier vient ainsi séparer les autres éléments du flux secondaire 208 pour les protéger et pour former une surface aérodynamique dans la veine secondaire 202.

Le mécanisme de manœuvre 250 comporte un deuxième bras 258 qui présente une première extrémité et une deuxième extrémité. La première extrémité du deuxième bras 258 est montée articulée, en particulier mobile en rotation, sur le capot mobile 207a autour d'un deuxième axe de rotation 258a orthoradial par rapport à l'axe longitudinal X.

Le deuxième bras 258 est monté mobile en rotation sur le capot mobile 207a par l'intermédiaire de deux charnières 284 qui présentent le même axe de charnière confondu avec le deuxième axe de rotation 258a. Les charnières 284 sont disposées au niveau de la première extrémité du deuxième bras 258 qui, en position reculée/ouverte, est en aval tandis que la deuxième extrémité est orientée vers l'amont.

Le mécanisme de manœuvre 250 comporte un troisième bras 256 qui présente une première extrémité et une deuxième extrémité. La première extrémité du troisième bras 256 est montée articulée, en particulier mobile en rotation, sur la deuxième extrémité du deuxième bras 258 autour d'un troisième axe de rotation 256a orthoradial par rapport à l'axe longitudinal X.

Le troisième bras 256 est monté mobile en rotation sur le deuxième bras 258 par l'intermédiaire d'une charnière 286. La charnière 286 est disposée au niveau de la première extrémité du troisième bras 256 qui, en position reculée/ouverte, est en aval tandis que la deuxième extrémité est orientée vers l'amont. La charnière 286 prend ici la forme d'une chape femelle solidaire du troisième bras 256 et d'une chape mâle solidaire du deuxième bras 258. La chape mâle s'insère dans la chape femelle et y est fixée par la mise en place d'un arbre de solidarisation.

Le mécanisme de manœuvre 250 comporte un quatrième bras 254 qui présente une première extrémité et une deuxième extrémité. La première extrémité du quatrième bras 254 est montée articulée, en particulier mobile en rotation, sur la deuxième extrémité du troisième bras 256 autour d'un quatrième axe de rotation 254a orthoradial par rapport à l'axe longitudinal X.

En outre, la deuxième extrémité du quatrième bras 254 est montée articulée, en particulier mobile en rotation, sur la deuxième extrémité du premier bras 252 autour d'un cinquième axe de rotation 254b perpendiculaire au quatrième axe de rotation 254a.

Le quatrième bras 254 est monté mobile en rotation sur le troisième bras 256 par l'intermédiaire d'une charnière 288. La charnière 288 est disposée au niveau de la première extrémité du quatrième bras 254, en position reculée/ouverte, est en aval tandis que la deuxième extrémité est orientée vers l'amont. La charnière 288 prend ici la forme d'une chape femelle solidaire du troisième bras 256 et d'une chape mâle solidaire du quatrième bras 254. La chape mâle s'insère dans la chape femelle et y est fixée par la mise en place d'un arbre de solidarisation.

Le quatrième bras 254 est monté mobile en rotation sur le premier bras 252 par l'intermédiaire d'une liaison pivot 290.

Pour chaque volet inverseur 104 de la paire, le mécanisme de manœuvre 250 comporte une ferrure 260 montée articulée, en particulier mobile en rotation, sur le troisième bras 256 autour d'un sixième axe de rotation 260a perpendiculaire au troisième axe de rotation 256a. Il y a donc deux ferrures 260 montées sur le troisième bras 256, chacune par l'intermédiaire d'une liaison pivot 292 autour du sixième axe de rotation 260a.

Ici chaque ferrure 260 présente un fût 294 emmanché autour d'un arbre de rotation 296 solidaire du troisième bras 256.

Pour chaque volet inverseur 104 de la paire, le mécanisme de manœuvre 250 comporte un arbre de liaison 264 dont une première extrémité est montée articulée, en particulier mobile en rotation, sur la ferrure 260 autour d'un septième axe de rotation 264a perpendiculaire au sixième axe de rotation 260a.

Chaque arbre de liaison 264 est monté en rotation par l'intermédiaire d'une liaison pivot 298 réalisée par deux paliers coaxiaux avec le septième axe de rotation 264a et solidaires de la ferrure 260 et dans chacun desquels l'arbre de liaison 264 est monté rotatif. Les deux arbres de liaison 264 se positionnent en V autour du sixième axe de rotation 260a et le mouvement de chaque ferrure 260 permet une adaptation à un déplacement tridimensionnel.

Chaque arbre de liaison 264 est ainsi mobile en rotation autour du sixième axe de rotation 260a et du septième axe de rotation 264a.

Pour chaque volet inverseur 104 de la paire, le mécanisme de manœuvre 250 comporte aussi un arbre 262 lié audit volet inverseur 104, et monté articulé sur une deuxième extrémité de l'arbre de liaison 264 par une liaison rotule 264b et où l'axe de l'arbre 262 est orthoradial par rapport à l'axe longitudinal X.

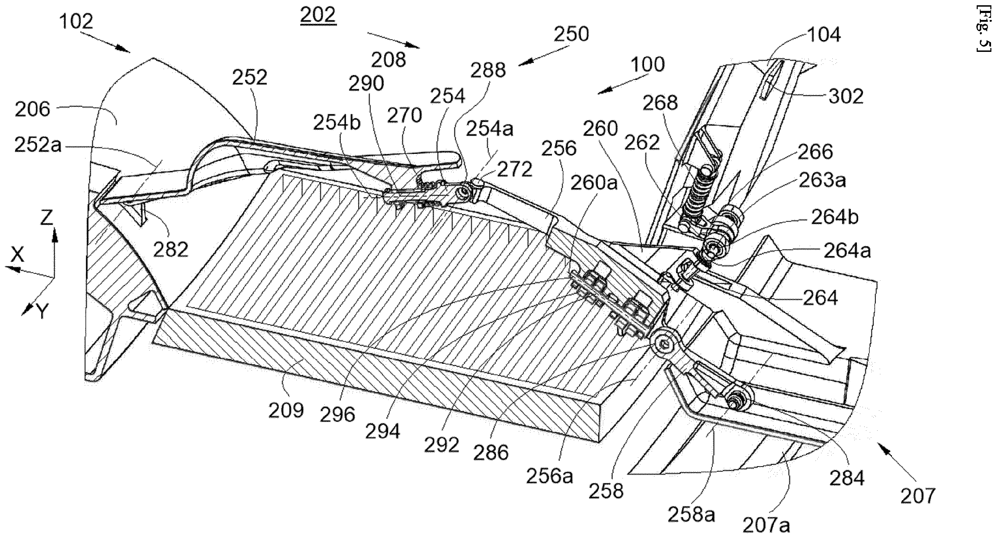

Le mécanisme de manœuvre 250 est ainsi arrangé de manière à se replier en position avancée/fermée pour un gain de place et à se déplier en position reculée/ouverte. Comme le montre la Fig. 4, en position avancée/fermée, les éléments du mécanisme de manœuvre 250 se replient sur eux-mêmes et comme le montre la Fig. 5, en position reculée/ouverte, les éléments du mécanisme de manœuvre 250 se déroulent et s'étirent le long de l'axe longitudinal X.

En outre, le mécanisme de manœuvre 250 est arrangé entre deux volets inverseurs 104 pour également un gain de place.

Lors du repliement du mécanisme de manœuvre 250, le troisième bras 256 passe derrière le deuxième bras 258 et dans le même temps les ferrures 260 oscillent autour du sixième axe de rotation 260a et les arbres de liaison 264 oscillent autour du septième axe de rotation 264a. Le mouvement de chaque arbre de liaison 264 entraîne le déplacement du volet inverseur 104 par l'intermédiaire de l'arbre 102.

Dans le mode de réalisation de l'invention proposé, en position avancée, les axes de rotation s'étendent de l'avant vers l'arrière dans l'ordre suivant : le premier axe de rotation 252a, le deuxième axe de rotation 258a, le troisième axe de rotation 256a et le quatrième axe de rotation 254a et où la deuxième extrémité du quatrième bras 254 est en avant par rapport à la première extrémité du quatrième bras 254, et en position reculée, les axes de rotation s'étendent de l'avant vers l'arrière dans l'ordre suivant : le premier axe de rotation 252a, le quatrième axe de rotation 254a, le troisième axe de rotation 256a, le deuxième axe de rotation 258a et où la deuxième extrémité du quatrième bras 254 est en avant par rapport à la première extrémité du quatrième bras 254.

Dans la variante de réalisation de la Fig. 11, l'arbre 262 est monté solidaire du volet inverseur 104.

Dans le mode de réalisation de l'invention des Figs. 4 à 10, l'arbre 262 est composé d'un premier sous-arbre 263a et d'un deuxième sous-arbre 263b qui sont solidaires l'un de l'autre et se prolongent l'un l'autre. Les deux sous-arbres 263a-b sont orthoradiaux par rapport à l'axe longitudinal X.

Le premier sous-arbre 263a est monté articulé sur la deuxième extrémité de l'arbre de liaison 264 par la liaison rotule 264b et le deuxième sous-arbre 263b est monté articulé, en particulier mobile en rotation, sur le volet inverseur 104 autour d'un huitième axe de rotation 262a.

Le deuxième sous-arbre 263b est monté en rotation par l'intermédiaire d'une liaison pivot 300 réalisée par deux paliers coaxiaux avec le huitième axe de rotation 262a et solidaires du volet inverseur 104 et dans chacun desquels le deuxième sous-arbre 263b est monté rotatif.

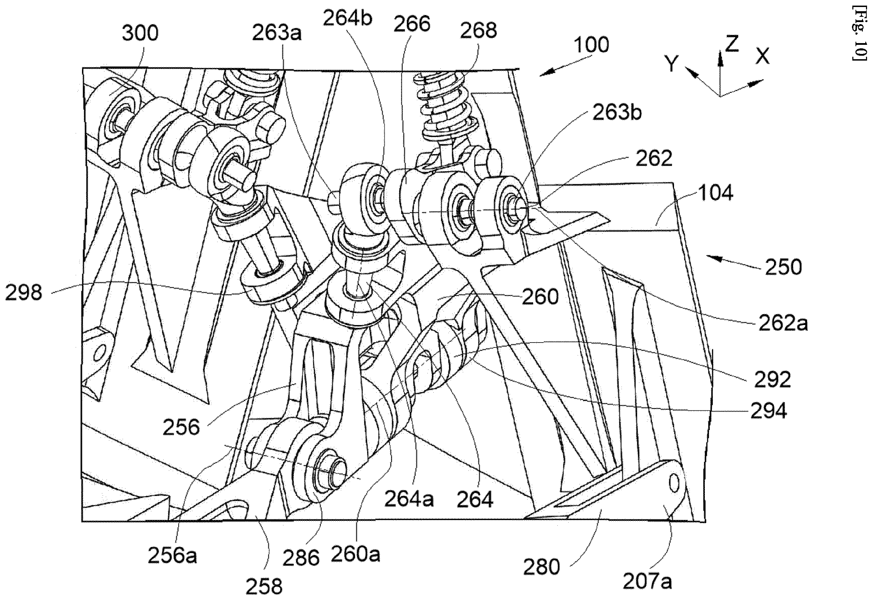

Dans le mode de réalisation de l'invention présenté sur la Fig. 10 en particulier, le premier sous-arbre 263a et le deuxième sous-arbre 263b sont décalés l'un par rapport à l'autre, c'est-à-dire parallèles entre eux mais dont les axes ne sont pas coaxiaux. Dans ce cas, le huitième axe de rotation 262a est l'axe du deuxième sous-arbre 263b. Le décalage entre les sous-arbres 263a-b permet de réaliser un mouvement excentrique.

Plus particulièrement dans ce dernier cas, l'arbre 262 comporte une palette 266 qui assure ici la jonction entre le premier sous-arbre 263a et le deuxième sous-arbre 263b. Le mécanisme de manœuvre 250 comporte un amortisseur à ressort 268 dont une première extrémité est montée articulée sur la palette 266 et dont la deuxième extrémité est montée articulée sur le volet inverseur 104. L'amortisseur à ressort 268 comporte ici deux coulisseaux montés mobiles l'un par rapport à l'autre, dont l'un est lié à la palette 266 et dont l'autre est lié au volet inverseur 104 et un ressort de compression qui tend à écarter les deux coulisseaux.

Comme le montre plus clairement la Fig. 5, la liaison entre la deuxième extrémité du quatrième bras 254 et la deuxième extrémité du premier bras 252 présente un degré de liberté en translation parallèlement au cinquième axe de rotation 254b afin d'absorber les changements de position lors du déploiement/repliement du mécanisme de manœuvre 250. Le mécanisme de manœuvre 250 comporte également un ressort de contrainte 270, typiquement un ressort de compression, disposé entre le quatrième bras 254 et le premier bras 252 et arrangé de manière à repousser le premier bras 252 à distance du quatrième axe de rotation 254a. Le ressort de contrainte 270 permet une adaptation en longueur.

Pour absorber les chocs et les jeux en position avancée/fermée, le mécanisme de manœuvre 250 comporte des patins élastiques 272 fixés sur le troisième bras 256 et arrangés pour venir contre le capot mobile 207a en position avancée. Les patins élastiques 272 sont disposés ici au niveau de la deuxième extrémité du troisième bras 256.

Comme le montre la Fig. 2, en position avancée/fermée, le premier bras 252 peut présenter un bord parallèle et légèrement distant du bord du volet inverseur 104, mais le premier bras 252 peut également présenter une extension 274 qui recouvre les bords des volets inverseurs 104 voisins pour un gain aérodynamique.

Chaque volet inverseur 104 présente également au moins un patin élastique de contact 302 pour venir en contact contre le capot mobile 207 en position avancée/fermée.

## Revendications

1. Turboréacteur double flux (100) comportant un moteur (20) et une nacelle (102) entourant le moteur (20), où une veine secondaire (202) d'un flux secondaire (208) est délimitée entre la nacelle (102) et le moteur (20), ladite nacelle (102) présentant un axe longitudinal (X) et comportant :
- un cadre avant (206) fixe,
- un capot mobile (207a) qui est mobile en translation par rapport au cadre avant (206) selon une direction de translation entre une position avancée dans laquelle le capot mobile (207a) est rapproché du cadre avant (206) et une position reculée dans laquelle le capot mobile (207a) est éloigné du cadre avant (206) pour définir entre eux une fenêtre (210) ouverte entre la veine secondaire (202) et l'extérieur de la nacelle (102),
- au moins deux volets inverseurs (104), chacun étant monté articulé sur le capot mobile (207a) entre une position fermée dans laquelle il obture une zone de la fenêtre (210) et une position ouverte dans laquelle il n'obture pas ladite zone de la fenêtre (210) et s'étend en travers de la veine secondaire (202),
- un ensemble d'actionneurs (218) où chacun est monté entre le cadre avant (206) et le capot mobile (207a) et prévu pour assurer, à partir de la position avancée, un déplacement en translation du capot mobile (207a) jusqu'à la position reculée et inversement, et
- pour une paire de deux volets inverseurs (104) voisins, un mécanisme de manœuvre (250) comportant :
- un premier bras (252) présentant une première extrémité et une deuxième extrémité, où la première extrémité est montée articulée sur le cadre avant (206) autour d'un premier axe de rotation (252a) orthoradial par rapport à l'axe longitudinal (X),
- un deuxième bras (258) présentant une première extrémité et une deuxième extrémité, où la première extrémité est montée articulée sur le capot mobile (207a) autour d'un deuxième axe de rotation (258a) orthoradial par rapport à l'axe longitudinal (X),
- un troisième bras (256) présentant une première extrémité et une deuxième extrémité, où la première extrémité est montée articulée sur la deuxième extrémité du deuxième bras (258) autour d'un troisième axe de rotation (256a) orthoradial par rapport à l'axe longitudinal (X),
- un quatrième bras (254) présentant une première extrémité et une deuxième extrémité, où la première extrémité est montée articulée sur la deuxième extrémité du troisième bras (256) autour d'un quatrième axe de rotation (254a) orthoradial par rapport à l'axe longitudinal (X), et où la deuxième extrémité est montée articulée sur la deuxième extrémité du premier bras (252) autour d'un cinquième axe de rotation (254b) perpendiculaire au quatrième axe de rotation (254a),
- pour chaque volet inverseur (104) de la paire, une ferrure (260) montée articulée sur le troisième bras (256) autour d'un sixième axe de rotation (260a) perpendiculaire au troisième axe de rotation (256a), et
- pour chaque volet inverseur (104) de la paire, un arbre de liaison (264) dont une première extrémité est montée articulée sur la ferrure (260) autour d'un septième axe de rotation (264a) perpendiculaire au sixième axe de rotation (260a),
où pour chaque volet inverseur (104) de la paire, un arbre (262) dudit volet inverseur (104) est monté articulé sur une deuxième extrémité de l'arbre de liaison (264) par une liaison rotule (264b) et où l'axe de l'arbre (262) est orthoradial par rapport à l'axe longitudinal (X).

2. Turboréacteur double flux (100) selon la revendication 1, **caractérisé en ce qu'**en position avancée, les axes de rotation s'étendent de l'avant vers l'arrière dans l'ordre suivant :
le premier axe de rotation (252a), le deuxième axe de rotation (258a), le troisième axe de rotation (256a) et le quatrième axe de rotation (254a) et où la deuxième extrémité du quatrième bras (254) est en avant par rapport à la première extrémité du quatrième bras (254),
et **en ce qu'**en position reculée, les axes de rotation s'étendent de l'avant vers l'arrière dans l'ordre suivant : le premier axe de rotation (252a), le quatrième axe de rotation (254a), le troisième axe de rotation (256a), le deuxième axe de rotation (258a) et où la deuxième extrémité du quatrième bras (254) est en avant par rapport à la première extrémité du quatrième bras (254).

3. Turboréacteur double flux (100) selon l'une des revendications 1 ou 2, **caractérisé en ce que** l'arbre (262) est composé d'un premier sous-arbre (263a) et d'un deuxième sous-arbre (263b) solidaires l'un de l'autre, **en ce que** le premier sous-arbre (263a) est monté articulé sur la deuxième extrémité de l'arbre de liaison (264) par la liaison rotule (264b) et **en ce que** le deuxième sous-arbre (263b) est monté articulé sur le volet inverseur (104) autour d'un huitième axe de rotation (262a).

4. Turboréacteur double flux (100) selon la revendication 3, **caractérisé en ce que** le premier sous-arbre (263a) et le deuxième sous-arbre (263b) sont décalés l'un par rapport à l'autre.

5. Turboréacteur double flux (100) selon l'une des revendications 3 ou 4, **caractérisé en ce que** l'arbre (262) comporte une palette (266), et **en ce que** le mécanisme de manœuvre (250) comporte un amortisseur à ressort (268) dont une première extrémité est montée articulée sur la palette (266) et dont la deuxième extrémité est montée articulée sur le volet inverseur (104).

6. Turboréacteur double flux (100) selon l'une des revendications 1 à 5, **caractérisé en ce que** la liaison entre la deuxième extrémité du quatrième bras (254) et la deuxième extrémité du premier bras (252) présente un degré de liberté en translation parallèlement au cinquième axe de rotation (254b), **en ce que** le mécanisme de manœuvre (250) comporte un ressort de contrainte (270) disposé entre le quatrième bras (254) et le premier bras (252) et arrangé de manière à repousser le premier bras (252) à distance du quatrième axe de rotation (254a).

7. Turboréacteur double flux (100) selon l'une des revendications 1 à 6, **caractérisé en ce que** le premier bras (252) forme un capot et **en ce qu'**en position avancée, le premier bras (252) recouvre les éléments du mécanisme de manœuvre (250).

8. Turboréacteur double flux (100) selon l'une des revendications 1 à 7, **caractérisé en ce que** le mécanisme de manœuvre (250) comporte des patins élastiques (272) fixés sur le troisième bras (256) et arrangés pour venir contre le capot mobile (207a) en position avancée.

9. Turboréacteur double flux (100) selon l'une des revendications 1 à 8, **caractérisé en ce qu'**en position avancée, le premier bras (252) présente une extension (274) qui recouvre les bords des volets inverseurs (104) voisins.

10. - Aéronef (50) comportant au moins un turboréacteur double flux (100) selon l'une des revendications précédentes.
